(19) Europäisches Patentamt
European Patent Office
Office européen des brevets

(11) **EP 2 413 645 A2**

(12) **EUROPEAN PATENT APPLICATION**

(43) Date of publication:
**01.02.2012 Bulletin 2012/05**

(51) Int Cl.:
*H04W 52/48* (2009.01)   *H04W 52/24* (2009.01)

(21) Application number: **11175128.5**

(22) Date of filing: **25.07.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **30.07.2010 US 847457**<br><br>(71) Applicant: **Nokia Corporation**<br>**02150 Espoo (FI)** | (72) Inventors:<br>• **Chen, Tao**<br>**24240 Salo (FI)**<br>• **Kunnari, Esa**<br>**96900 Saarenkylä (FI)**<br><br>(74) Representative: **Nokia Corporation**<br>**Intellectual Property Department**<br>**P.O. Box 407**<br>**00045 Nokia Group (FI)** |

(54) **Apparatus and method for transmitter power control for device-to-device communications in a communication system**

(57) An apparatus, method and system for controlling a transmitter power level for direct device-to-device communications in a communication system. In one embodiment, an apparatus includes a processor and memory including computer program code. The memory and the computer program code are configured to, with the processor, cause the apparatus to monitor a feedback message from a base station to a user equipment participating in cellular communications employing a communication resource, and control a transmitter power level for device-to-device ("D2D") communications employing the communication resource as a function of the feedback message.

FIGURE 8

**Description**

TECHNICAL FIELD

The present invention is directed, in general, to communication systems and, in particular, to an apparatus, method and system to control a transmitter power level for direct device-to-device communications in a communication system.

BACKGROUND

Long term evolution ("LTE") of the Third Generation Partnership Project ("3GPP"), also referred to as 3GPP LTE, refers to research and development involving the 3GPP LTE Release 8 and beyond, which is the name generally used to describe an ongoing effort across the industry aimed at identifying technologies and capabilities that can improve systems such as the universal mobile telecommunication system ("UMTS"). The notation "LTE-A" is generally used in the industry to refer to further advancements in LTE. The goals of this broadly based project include improving communication efficiency, lowering costs, improving services, making use of new spectrum opportunities, and achieving better integration with other open standards.

The evolved universal terrestrial radio access network ("E-UTRAN") in 3GPP includes base stations providing user plane (including packet data convergence protocol/radio link control/media access control/physical ("PDCP/RLC/MAC/PHY") sublayers) and control plane (including a radio resource control ("RRC") sublayer) protocol terminations towards wireless communication devices such as cellular telephones. A wireless communication device or terminal is generally known as user equipment (also referred to as "UE"). A base station is an entity of a communication network often referred to as a Node B or an NB. Particularly in the E-UTRAN, an "evolved" base station is referred to as an eNodeB or an eNB. For details about the overall architecture of the E-UTRAN, see 3GPP Technical Specification ("TS") 36.300 v8.7.0 (2008-12), which is incorporated herein by reference. For details of the radio resource control management, see 3GPP TS 25.331 v.9.1.0 (2009-12) and 3GPP TS 36.331 v.9.1.0 (2009-12), which are incorporated herein by reference.

As wireless communication systems such as cellular telephone, satellite, and microwave communication systems become widely deployed and continue to attract a growing number of users, there is a pressing need to accommodate a large and variable number of communication devices that transmit an increasing quantity of data within a fixed spectral allocation and limited transmit power. The increased quantity of data is a consequence of wireless communication devices transmitting video information and surfing the Internet, as well as performing ordinary voice communications. Such processes must be performed while accommodating substantially simultaneous operation of a large number of wireless communication devices.

Cellular communication systems have typically been structured with an architecture that enables a user equipment to communicate with another user equipment through one or more intermediary base stations that establish and control communication paths between the user equipment. However, direct device-to-device ("D2D"), mobile-to-mobile ("M2M"), terminal-to-terminal ("T2T"), peer-to-peer ("P2P") communications is beginning to be broadly integrated into cellular communication systems such as an LTE/LTE-A cellular communication system as specified in the 3GPP. Integration of direct device-to-device communications enable the end devices including user equipment such as mobile devices, terminals, peers, or machines to communicate over a direct wireless communication link that uses radio resources of the cellular communication system or network. In this manner, cellular communication resources are shared by the devices communicating directly with each other with devices having a normal communication link to a base station.

Adding direct device-to-device communications into a cellular communication system enable the possibility to reduce transmitter power consumption, both in user equipment and in base stations, thereby increasing cellular communication system capacity and establishing more services for the user equipment. However, efficiently controlling a transmitter power level for the user equipment for the D2D communications operating under an LTE cellular communication system without unnecessary expenditure of limited communication resources has remained an unsolved problem.

In an integrated communication system, communication resources are allocated to user equipment operating in the spectrum of the cellular communication system either in a cellular communication mode or in a semi-autonomous D2D communication mode. It is important to efficiently control the transmitter power level of user equipment in a cellular communication system employing D2D communications so that interference by the user equipment employing D2D communications with user equipment employing cellular communications can be avoided, especially when the cellular communication system spectrum is reused by the user equipment employing the D2D communications.

One of the more problematic issues is how to control the transmitter power level of user equipment in a cellular communication system when it engages in D2D communications with another user equipment in the communication system employing spectrum shared with the cellular communication system. In view of the growing deployment of communication systems such as cellular communication systems and growing utilization of D2D communications, it would be beneficial to employ a process and method that enables coexistence of these communication modes without unnecessary co-interference, and with efficient control of the user equipment transmitter power level that avoids the deficiencies of current communication systems.

SUMMARY OF THE INVENTION

These and other problems are generally solved or circumvented, and technical advantages are generally achieved, by embodiments of the present invention, which include an apparatus, method and system to control a transmitter power level for direct device-to-device communications in a communication system. In one embodiment, an apparatus includes a processor and memory including computer program code. The memory and the computer program code are configured to, with the processor, cause the apparatus to monitor a feedback message from a base station to a user equipment participating in cellular communications employing a communication resource, and control a transmitter power level for device-to-device ("D2D") communications employing the communication resource as a function of the feedback message.

The foregoing has outlined rather broadly the features and technical advantages of the present invention in order that the detailed description of the invention that follows may be better understood. Additional features and advantages of the invention will be described hereinafter, which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

BRIEF DESCRIPTION OF THE DRAWINGS

For a more complete understanding of the invention, and the advantages there of, reference is now made to the following descriptions taken in conjunction with the accompanying drawings, in which:

FIGUREs 1 and 2 illustrate system level diagrams of embodiments of communication systems including a base station and wireless communication devices that provide an environment for application of the principles of the present invention;

FIGUREs 3 and 4 illustrate system level diagrams of embodiments of communication systems including wireless communication systems that provide an environment for application of the principles of the present invention;

FIGURE 5 illustrates a system level diagram of an embodiment of a communication element of a communication system for application of the principles of the present invention;

FIGURE 6 illustrates a system level diagram of an embodiment of a communication system demonstrating exemplary interference associated with wireless communication devices in accordance with the principles of the present invention;

FIGURE 7 illustrates a signaling diagram of an embodiment of a method of operating a communication system in accordance with the principles of the present invention; and

FIGURE 8 illustrates a flow diagram of an embodiment of a method of operating a communication element in accordance with the principles of the present invention.

DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention. In view of the foregoing, the present invention will be described with respect to exemplary embodiments in a specific context of an apparatus, method and system to efficiently enable control of a transmitter power level of user equipment engaged in D2D communications that employs spectrum of a cellular communication system so that interference is managed between the two communication modes. The apparatus, method and system are applicable, without limitation, to any communication system including existing and future 3GPP technologies such as UMTS, LTE, and its future variants such as 4th generation ("4G") communication systems.

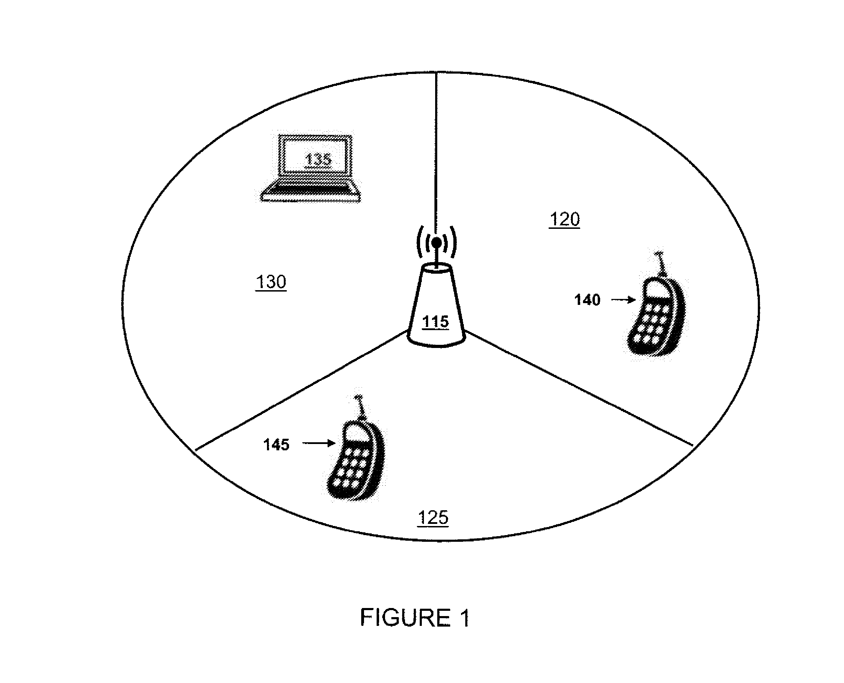

Turning now to FIGURE 1, illustrated is a system level diagram of an embodiment of a communication system including a base station 115 and wireless communication devices (e.g., user equipment) 135, 140, 145 that provides an environment for application of the principles of the present invention. The base station 115 is coupled to a public switched telephone network (not shown). The base station 115 is configured with a plurality of antennas to transmit and receive signals in a plurality of sectors including a first sector 120, a second sector 125, and a third sector 130, each of which typically spans 120 degrees. The three sectors or more than three sectors are configured per frequency, and one base station 115 can support more than one frequency. Although FIGURE 1 illustrates one wireless communication device (e.g., wireless communication device 140) in each sector *(e.g.* the first sector 120), a sector *(e.g.* the first sector 120) may generally contain a plurality of wireless communication devices. In an alternative embodiment, a base station 115 may be formed with only one sector (*e.g.* the first sector 120), and multiple base stations may be constructed to transmit according to co-operative multi-input/multi-output ("C-MIMO") operation, *etc.*

The sectors (e.g. the first sector 120) are formed by focusing and phasing radiated signals from the base station antennas, and separate antennas may be employed per sector (e.g. the first sector 120). The plurality of sectors 120, 125, 130 increases the number of subscriber stations (e.g., the wireless communication devices 135, 140, 145) that can simultaneously communicate with the base station 115 without the need to increase the utilized bandwidth by reduction of interference that results from focusing and phasing base station antennas. While the wireless communication devices 135, 140, 145 are part of a primary communication system, the wireless communication devices 135, 140, 145 and other devices such as machines (not shown) may be a part of a secondary communication system to participate in, without limitation, D2D and machine-to-machine communications or other communications.

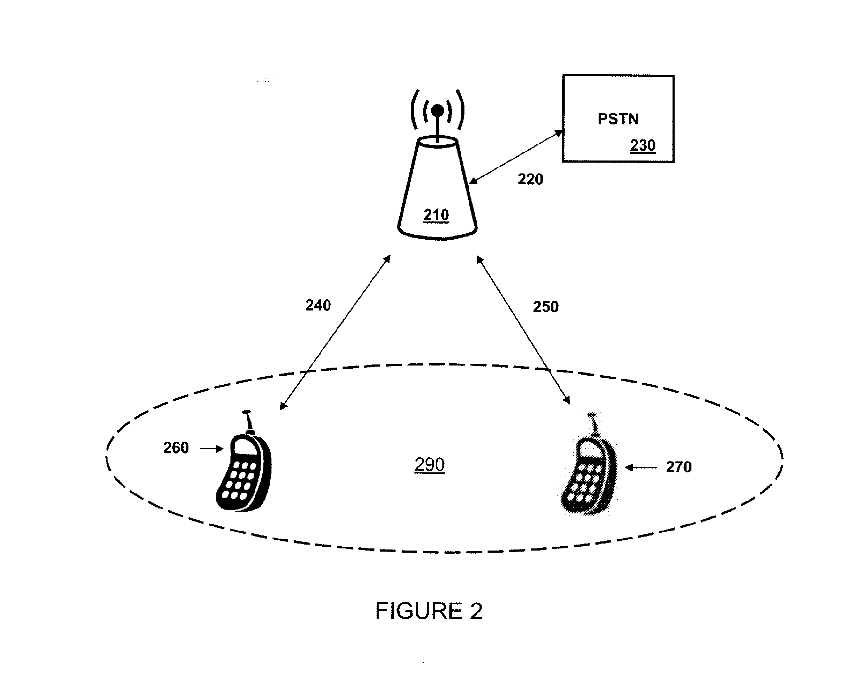

Turning now to FIGURE 2, illustrated is a system level diagram of an embodiment of a communication system including a base station 210 and wireless communication devices (e.g., user equipment) 260, 270 that provides an environment for application of the principles of the present invention. The communication system includes the base station 210 coupled by communication path or link 220 (e.g., by a fiber-optic communication path) to a core telecommunications network such as public switched telephone network ("PSTN") 230. The base station 210 is coupled by wireless communication paths or links 240, 250 to the wireless communication devices 260, 270, respectively, that lie within its cellular area 290.

In operation of the communication system illustrated in FIGURE 2, the base station 210 communicates with each wireless communication device 260, 270 through control and data communication resources allocated by the base station 210 over the communication paths 240, 250, respectively. The control and data communication resources may include frequency and time-slot communication resources in frequency division duplex ("FDD") and/or time division duplex ("TDD") communication modes. While the wireless communication devices 260, 270 are part of a primary communication system, the wireless communication devices 260, 270 and other devices such as machines (not shown) may be a part of a secondary communication system to participate in, without limitation, device-to-device and machine-to-machine communications or other communications.

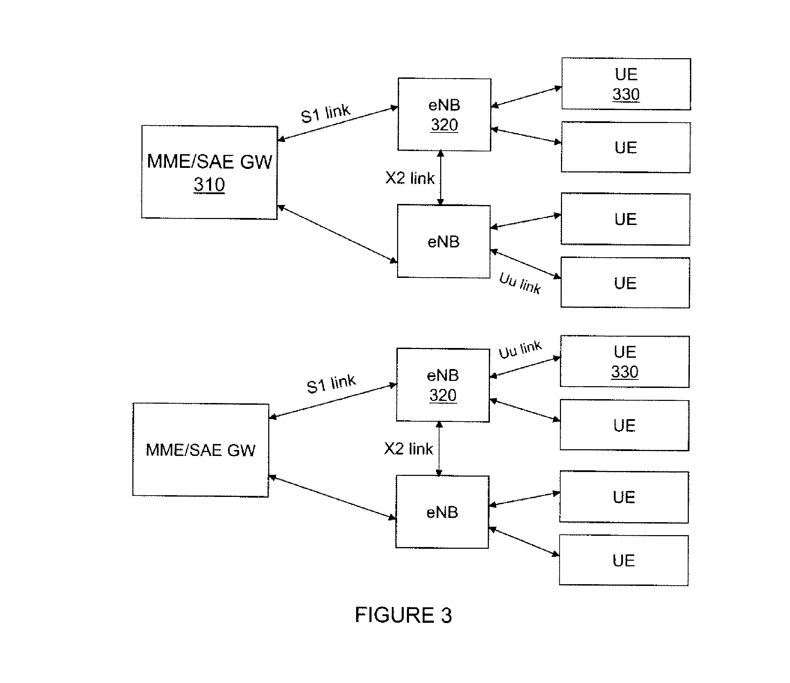

Turning now to FIGURE 3, illustrated is a system level diagram of an embodiment of a communication system including a wireless communication system that provides an environment for the application of the principles of the present invention. The wireless communication system may be configured to provide evolved UMTS terrestrial radio access network ("E-UTRAN") universal mobile telecommunications services. A mobile management entity/system architecture evolution gateway ("MME/SAE GW," one of which is designated 310) provides control functionality for an E-UTRAN node B (designated "eNB," an "evolved node B," also referred to as a "base station," one of which is designated 320) via an S 1 communication link (ones of which are designated "S 1 link"). The base stations 320 communicate via X2 communication links (ones of which are designated "X2 link"). The various communication links are typically fiber, microwave, or other high-frequency communication paths such as coaxial links, or combinations thereof.

The base stations 320 communicate with wireless communication devices such as user equipment ("UE," ones of which are designated 330), which is typically a mobile transceiver carried by a user. Thus, the communication links (designated "Uu" communication links, ones of which are designated "Uu link") coupling the base stations 320 to the user equipment 330 are air links employing a wireless communication signal such as, for example, an orthogonal frequency division multiplex ("OFDM") signal. While the user equipment 330 are part of a primary communication system, the user equipment 330 and other devices such as machines (not shown) may be a part of a secondary communication system to participate in, without limitation, D2D and machine-to-machine communications or other communications.

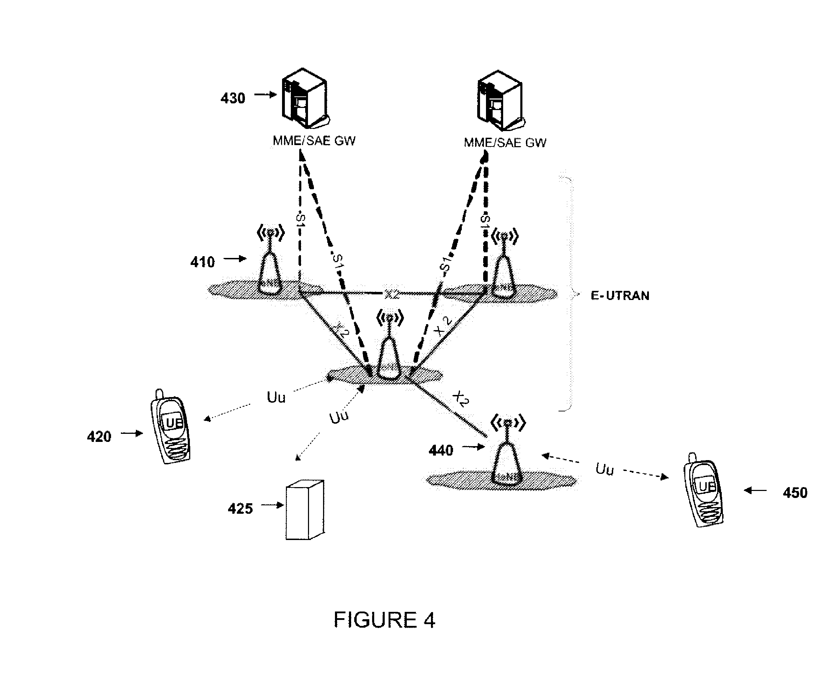

Turning now to FIGURE 4, illustrated is a system level diagram of an embodiment of a communication system including a wireless communication system that provides an environment for the application of the principles of the present invention. The wireless communication system provides an E-UTRAN architecture including base stations (one of which is designated 410) providing E-UTRAN user plane (packet data convergence protocol/radio link control/media access control/physical) and control plane (radio resource control) protocol terminations towards wireless communication devices such as user equipment 420 and other devices such as machines 425 (*e.g.*, an appliance, television, meter, *etc.).* The base stations 410 are interconnected with X2 interfaces or communication links (designated "X2"). The base stations 410 are also connected by S1 interfaces or communication links (designated "S1") to an evolved packet core ("EPC") including a mobile management entity/system architecture evolution gateway ("MME/SAE GW," one of which is designated 430). The S1 interface supports a multiple entity relationship between the mobile management entity/system architecture evolution gateway 430 and the base stations 410. For applications supporting inter-public land mobile handover, inter-eNB active mode mobility is supported by the mobile management entity/system architecture evolution gateway 430 relocation via the S1 interface.

The base stations 410 may host functions such as radio resource management. For instance, the base stations 410 may perform functions such as internet protocol ("IP") header compression and encryption of user data streams, ciphering of user data streams, radio bearer control, radio admission control, connection mobility control, dynamic allocation of communication resources to user equipment in both the uplink and the downlink, selection of a mobility management entity at the user equipment attachment, routing of user plane data towards the user plane entity, scheduling and transmission of paging messages (originated from the mobility management entity), scheduling and transmission of broadcast information (originated from the mobility management entity or operations and maintenance), and measurement and reporting configuration for mobility and scheduling. The mobile management entity/system architecture evolution gateway 430 may host functions such as distribution of paging messages to the base stations 410, security control, termination of user plane packets for paging reasons, switching of user plane for support of the user equipment mobility, idle state mobility control, and system architecture evolution bearer control. The user equipment 420 and machines 425 receive an allocation of a group of information blocks from the base stations 410.

Additionally, the ones of the base stations 410 are coupled a home base station 440 (a device), which is coupled to devices such as user equipment 450 and/or machines (not shown) for a secondary communication system. The base station 410 can allocate secondary communication system resources directly to the user equipment 450 and machines, or to the home base station 440 for communications (*e.g.*, local or D2D communications) within the secondary communication system. The secondary communication resources can overlap with communication resources employed by the base station 410 to communicate with the user equipment 420 within its serving area. For a better understanding of home base stations (designated "HeNB"), see 3 GPP TS 32.781 v.9.1.0 (2010-03), which is incorporated herein by reference. While the user equipment 420 and machines 425 are part of a primary communication system, the user equipment 420, machines 425 and home base station 440 (communicating with other user equipment 450 and machines (not shown)) may be a part of a secondary communication system to participate in, without limitation, D2D and machine-to-machine communications or other communications.

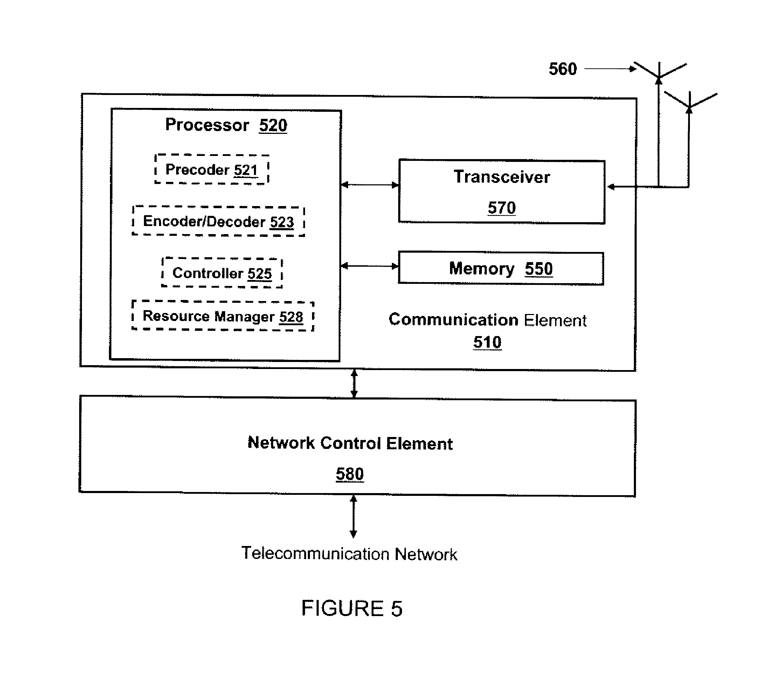

Turning now to FIGURE 5, illustrated is a system level diagram of an embodiment of a communication element 510 of a communication system for application of the principles of the present invention. The communication element or device 510 may represent, without limitation, a base station, a wireless communication device (*e.g.*, a subscriber station, terminal, mobile station, user equipment, machine), a network control element, a communication node, or the like. When the communication element or device 510 represents a user equipment, the user equipment may be configured to communicate with another user equipment employing one or more base stations as intermediaries in the communication path (referred to as cellular communications). The user equipment may also be configured to communicate directly with another user equipment without direct intervention of the base station in the communication path (referred to as device-to-device ("D2D") communications). The communication element 510 includes, at least, a processor 520, memory 550 that stores programs and data of a temporary or more permanent nature, an antenna 560, and a radio frequency transceiver 570 coupled to the antenna 560 and the processor 520 for bidirectional wireless communications. The communication element 510 may be formed with a plurality of antennas to enable a multiple-input multiple output ("MIMO") mode of operation. The communication element 510 may provide point-to-point and/or point-to-multipoint communication services.

The communication element 510, such as a base station in a cellular communication system or network, may be coupled to a communication network element, such as a network control element 580 of a public switched telecommunication network ("PSTN"). The network control element 580 may, in turn, be formed with a processor, memory, and other electronic elements (not shown). The network control element 580 generally provides access to a telecommunication network such as a PSTN. Access may be provided using fiber optic, coaxial, twisted pair, microwave communications, or similar link coupled to an appropriate link-terminating element. A communication element 510 formed as a wireless communication device is generally a self-contained device intended to be carried by an end user.

The processor 520 in the communication element 510, which may be implemented with one or a plurality of processing devices, performs functions associated with its operation including, without limitation, precoding of antenna gain/phase parameters (precoder 521), encoding and decoding (encoder/decoder 523) of individual bits forming a communication message, formatting of information, and overall control (controller 525) of the communication element, including processes related to management of communication resources (resource manager 528). Exemplary functions related to management of communication resources include, without limitation, hardware installation, traffic management, performance data analysis, tracking of end users and equipment, configuration management, end user administration, management of wireless communication devices, management of tariffs, subscriptions, security, billing and the like. For instance, in accordance with the memory 550, the resource manager 528 is configured to allocate primary and second communication resources (e.g., time and frequency communication resources) for transmission of voice communications and data to/from the communication element 510 and to format messages including the communication resources therefor in a primary and secondary communication system.

The execution of all or portions of particular functions or processes related to management of communication resources may be performed in equipment separate from and/or coupled to the communication element 510, with the results of such functions or processes communicated for execution to the communication element 510. The processor 520 of the communication element 510 may be of any type suitable to the local application environment, and may include one or more of general-purpose computers, special purpose computers, microprocessors, digital signal processors ("DSPs"), field-programmable gate arrays ("FPGAs"), application-specific integrated circuits ("ASICs"), and processors based on a multi-core processor architecture, as non-limiting examples.

The transceiver 570 of the communication element 510 modulates information on to a carrier waveform for transmission by the communication element 510 via the antenna(s) 560 to another communication element. The transceiver 570 demodulates information received via the antenna(s) 560 for further processing by other communication elements. The transceiver 570 is capable of supporting duplex operation for the communication element 510.

The memory 550 of the communication element 510, as introduced above, may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. The programs stored in the memory 550 may include program instructions or computer program code that, when executed by an associated processor, enable the communication element 510 to perform tasks as described herein. Of course, the memory 550 may form a data buffer for data transmitted to and from the communication element 510. Exemplary embodiments of the system, subsystems, and modules as described herein may be implemented, at least in part, by computer software executable by processors of, for instance, the wireless communication device and the base station, or by hardware, or by combinations thereof. As will become more apparent, systems, subsystems and modules may be embodied in the communication element 510 as illustrated and described herein.

Efficiency in the utilization of communication resources can be obtained by structuring cellular communication systems with an architecture that enables direct device-to-device, mobile-to-mobile, terminal-to-terminal, and peer-to-peer communications is beginning to be broadly integrated into cellular communication systems such as an LTE/LTE-A cellular communication systems as specified in 3GPP. The D2D communications enable the user equipment such as mobile devices, terminals, peers, or machines to communicate over a wireless communication link that avoids using one or more base stations as intermediaries in the communication path. The D2D communications use radio communication resources of the cellular communication system or network, thus sharing cellular communication resources with devices having a normal communication link to a base station. An exemplary cellular communication system or network operates in frequency division duplex mode in which device-to-device connections utilize time division duplex mode using cellular communication system or network uplink ("UL"), downlink ("DL"), or combination thereof, communication resources controlled by the base station(s). The general concept of the FDD or TDD cellular communication systems wherein a direct communication connection utilizes either FDD or TDD communications are described in International Patent Application WO 2005/060182 by McLaughlin, et al*.,* entitled "Cellular Communication System," filed December 16, 2004, which is incorporated herein by reference.

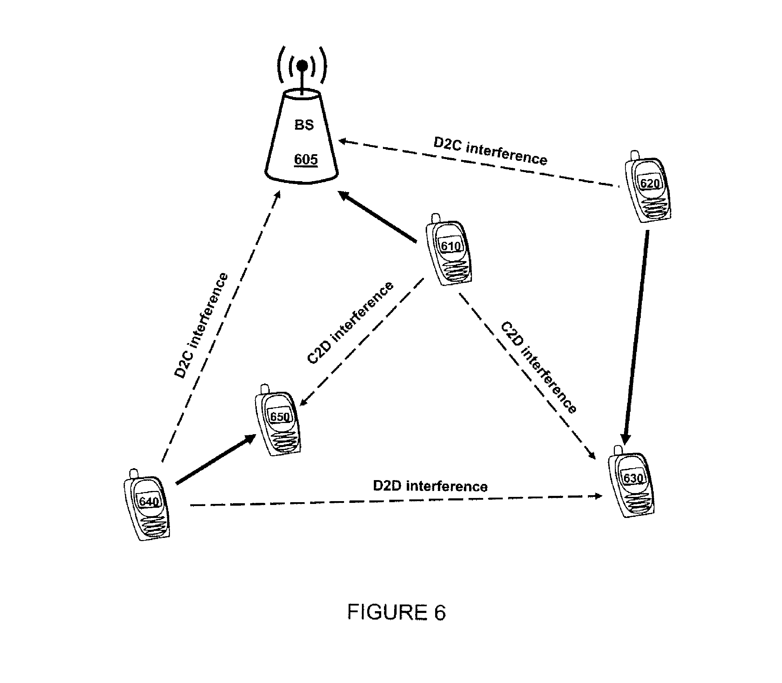

Turning now to FIGURE 6, illustrated is a system level diagram of an embodiment of a communication system demonstrating exemplary interference associated with wireless communication devices (e.g., user equipment) in accordance with the principles of the present invention. The types of interference illustrated with respect to FIGURE 6 occur as result of spectral reuse among user equipment for cellular communications and D2D communications in the communication system. The communication system includes a base station 605 and first, second, third, fourth and fifth user equipment 610, 620, 630, 640, 650 within a served area. The first user equipment 610 transmits a signal over an uplink to the base station 605. The second user equipment 620 transmits a signal over a direct device-to-device link to the third user equipment 630. The fourth user equipment 640 transmits a signal over a direct device-to-device link to the fifth user equipment 650.

One type of interference illustrated in FIGURE 6 is cellular-to-device ("C2D") interference, wherein cellular communications (or transmissions) interfere with D2D communications as represented as the C2D interference. Another type of interference is D2D interference, wherein D2D communications interfere with one another each other as represented as the D2D interference. A third type of interference is device-to-cellular ("D2C") interference, wherein a D2D communication interferes with cellular communications as represented as the D2C interference. While some progress has been made to reduce interference in the communication system with respect to the cellular and D2D communications, it would be beneficial to resolve the interference issues without significantly impacting the performance of the D2D communications.

In one solution, once a base station experiences a high level of interference from user equipment participating in D2D communications, the base station sends a power control command to adjust the transmitter power level of the user equipment. This process, however, is limited to a cellular-controlled communication system wherein allocation of a communication resource and the transmitter power level adjustment for the D2D communications are controlled by the base station via downlink signaling over a physical downlink control channel ("PDCCH"). Thus, the downlink signaling is required by the base station, which consumes a valuable communication resource.

In another solution, the transmitter power level for user equipment participating in D2D communications is reduced based on signaling by the base station. No simple rule, however, has been established to set the value of the reduced transmitter power level for the user equipment. The reduced value may be set differently on a case-by-case basis and downlink signaling would be employed to adjust the value, which again consumes a valuable communication resource.

In yet another solution, the base station calculates and broadcasts expected (or allowed) D2D interference (i.e., a table "ExpInterfereTable" representing an expected level of D2D interference for each uplink resource block ("RB")) to the user equipment in its serving area. Based on the received ExpInterfereTable, the user equipment participating in D2D communications derive an allowed maximum transmitter power level based on path loss from the user equipment to the base station and an allowed interference level at the base station. (See, e.g., PCT Application No. PCT/IB2009/051772, entitled "Method and Apparatus for Managing Device-To-Device Interference," filed April 30, 2009, which is incorporated herein by reference.) For this solution, a broadcast message is transmitted in the downlink, which consumes scarce broadcasting communication resources. The allowed level of interference typically would be based on a fixed threshold regardless of the channel conditions for cellular communications and an optimal threshold setting would be difficult to establish. Thus, a viable solution does not exist for avoiding interference to cellular communications (or transmissions) when the cellular communication system spectrum is reused for D2D communications, particularly when the base station does not control the D2D communication path.

As introduced herein, a power control procedure is employed to reduce or avoid interference to cellular communications while enhancing D2D communication performance when the user equipment reuses communication resources (*e.g.*, cellular communication resources) for the D2D communications. It is generally assumed herein that user equipment participating in D2D communications can obtain a radio network temporary identifier ("RNTI") of other user equipment participating in cellular communications so that the user equipment participating in the D2D communications can decode the PDCCH of the user equipment participating in cellular communications. It is further assumed that interference from cellular communications to user equipment participating in D2D communications can be controlled either by means of conventional cellular-controlled communication resources or by communication resources for semi-autonomous D2D communications.

To reduce or avoid interference to uplink transmissions of other user equipment participating in cellular communications, the user equipment transmitting D2D communications adjusts a transmitter power level based on hybrid automatic retransmit request ("HARQ") feedback message for the impacted user equipment participating in the cellular communications. The uplink cellular transmission of the other user equipment and the corresponding feedback message from the base station can be obtained by the user equipment participating in the D2D communications by monitoring the PDCCHs thereof.

In an exemplary method, the transmitter power level of the user equipment transmitting D2D communications is controlled based on an instantaneous HARQ feedback message of the impacted user equipment participating in cellular communications. If the HARQ feedback message for a first uplink transmission of the impacted user equipment participating in the cellular communications is an acknowledgment ("ACK") of a successful reception, then the transmitter power level is increased as represented by the equation:

$$TxPower = TxPower + UpStep,$$

wherein the initial transmitter power level TxPower on the right side of the equation is increased by an increment UpStep to produce the increased transmitter power level TxPower on the left side of the equation.

If the HARQ feedback for a first uplink transmission of the impacted user equipment participating in the cellular communications is a negative acknowledgment ("NAK"), then the transmitter power level is decreased as represented by the equation:

$$TxPower = TxPower-DownStep,$$

wherein the initial transmitter power level TxPower on the right side of the equation is decreased by the decrement DownStep to produce the decreased transmitter power level TxPower on the left side of the equation.

The respective transmitter power level increment or decrement UpStep, DownStep can be derived from the block error rate ("BLER") target value of the impacted user equipment configured by the communication system according to the following equation:

$$BLER\_Target = 1/(1+DownStep/UpStep).$$

For example, in the case of a block error rate target "BLER_Target" equal to 20 percent ("%") at the first transmission, then:

$$if\ UpStep = 1\ dB,\ then\ DownStep = 4\ dB.$$

In this way, the transmitter power level quickly converges to reduce the likelihood that there is strong interference to the user equipment participating in the cellular communications. Thus, the cellular communications from user equipment are not impacted in a significant way from the D2D communications that share the cellular communication system spectrum. Fast response is, therefore, provided for D2C interference to cellular communications. Interference with cellular communications by the D2D communications can thereby be quickly reduced or avoided by a simple and efficient process of user equipment participating in D2D communications monitoring PDCCHs of other user equipment participating in cellular communications on which the uplink transmission grant and the corresponding feedback information are carried.

In another exemplary method, the transmitter power level is controlled based on average BLER rather than on instantaneous HARQ feedback of the impacted user equipment participating in the cellular communications. The average BLER is calculated according to HARQ feedback messages collected for a first (or a later) uplink transmission of the cellular communications within a period of time (e.g., 20 millisecond ("ms")). If the average BLER calculated based on HARQ feedback of the first transmission within the period of time is smaller than the block error rate target "BLER_Target" at the first transmission (e.g., a BLER target equal to 20%), then the transmitter power level is increased as described previously hereinabove by the equation:

$$TxPower = TxPower + UpStep.$$

If the average BLER calculated based on HARQ feedback of the first transmission within a period of time is larger than the BLER_Target at the first transmission (e.g., a BLER target equal to 20%), then the transmitter power level is decreased as described previously hereinabove by the equation:

$$TxPower=TxPower - DownStep.$$

If the average BLER calculated based on HARQ feedback of the first transmission within the period of time is equal to the BLER_Target at the first transmission *(e.g.,* a BLER target equal to 20%), then the transmitter power level is not changed, *i.e.:*

$$TxPower = TxPower\ (i.e.,\ transmitter\ power\ level\ is\ held\ constant).$$

In this case, the increment and decrement UpStep, DownStep may be set to the same value such as 1 decibel ("dB"). This overall arrangement produces efficient communication operation with small change in transmitter power level adjustment, which provides an efficient way to reduce or avoid interference to cellular communications from D2D communications. Alternatively, the BLER target mentioned above can be adjusted for a later transmission in addition to the first transmission, depending on the communication system configuration.

Furthermore, a minimum and a maximum value of a transmitter power control dynamic range can also be set. The minimum transmitter power level can be set to satisfy a D2D service requirement. For example, the minimum transmitter power level could be set to support the lowest modulation and coding scheme ("MCS") for the D2D communications. Alternatively, the minimum transmitter power level could be set to trigger a mode selection. For example, once the transmitter power level is too low to support the D2D communications, a D2D/cellular operational mode selection would be triggered. The maximum transmitter power level can be set according to a cellular communication system (such as an LTE communication system) fractional power control equation (see, *e.g.*, 3GPP TS 36.213 v.8.8.0 (2009-09), which is incorporated herein by reference) that reflects path loss from a user equipment participating in the D2D communications to a base station. Accordingly, the transmitter power level can be adjusted within a predefined dynamic range.

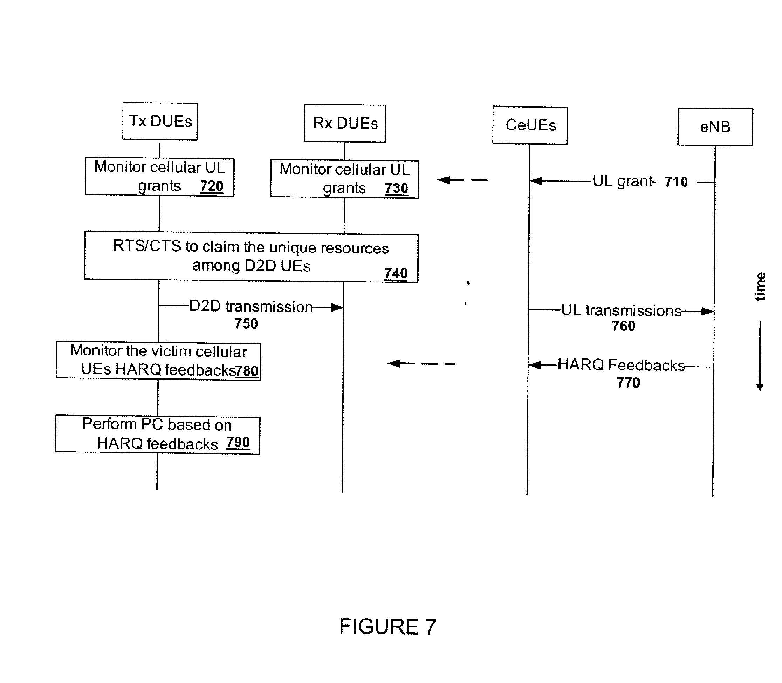

Turning now to FIGURE 7, illustrated is a signaling diagram of an embodiment of a method of operating a communication system in accordance with the principles of the present invention. In particular, the method demonstrates controlling a transmitter power level for a semi-autonomous D2D communication mode wherein a base station does not control the transmitter power level. The method illustrates an exemplary cooperation between a base station (designated "eNB"), user equipment communicating with a cellular communication system (referred to as cellular user equipment and designated "CeUEs"), user equipment transmitting D2D communications (referred to as transmitting D2D user equipment and designated "TxDUEs") and user equipment receiving D2D communication (referred to as receiving D2D user equipment and designated "RxDUEs") over communication resources such as spectrum shared with the cellular communication system.

As represented by a signal 710, the base station transmits an uplink grant on a downlink to the cellular user equipment within its serving area. The transmitting and receiving D2D user equipment monitor the uplink grants to the cellular user equipment as represented by modules 720, 730, respectively, to ascertain the communication resource allocations. The transmitting and receiving D2D user equipment select communication resources that will produce the least or acceptable interference from the cellular user equipment (e.g., communication resources that minimize interference from the cellular user equipment to the transmitting and receiving D2D user equipment).

The transmitting and receiving D2D user equipment use a request-to-send/clear-to-send ("RTS/CTS") message sequence, as represented by module 740, to obtain or select communication resources to reduce or avoid interference among the D2D user equipment. The transmitting D2D user equipment provide D2D transmissions at or about the same time as the cellular user equipment provide cellular communications, as represent by signals 750, 760, respectively, on reused communication resources.

In response, the base station sends a HARQ feedback message over a PDCCH to the cellular user equipment as represented by signal 770. Meanwhile, the transmitting D2D user equipment monitor the HARQ (or other) feedback message for the impacted cellular user equipment (i.e., the cellular user equipment reusing the same communication resources as the D2D transmissions) as represented by module 780. Based on the HARQ feedback messages, the transmitting D2D user equipment adjusts its transmitter power level accordingly, as represented by module 790. Thus, the D2D user equipment performs power control ("PC") based on the HARQ feedback messages. The interference to cellular user equipment, therefore, is reduced or avoided from the D2D user equipment, while maintaining a level of D2D communication performance and reducing consumption of spectral communication resources.

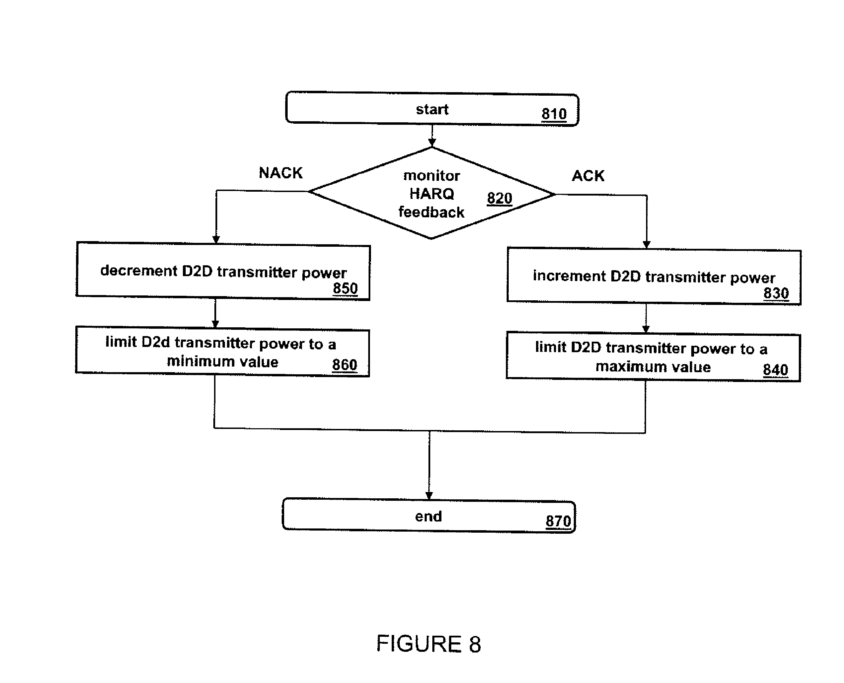

Turning now to FIGURE 8, illustrated is a flow diagram of an embodiment of a method of operating a communication element in accordance with the principles of the present invention. In particular, the method demonstrates controlling a transmitter power level within a D2D user equipment of a communication system. The method begins at a step or module 810. At a decisional step or module 820, the D2D user equipment monitors HARQ feedback messages in a downlink to another user equipment (e.g., a cellular user equipment) from a base station. If the HARQ feedback message provides a positive acknowledgment ("ACK"), the transmitter power level is incremented (in a step or module 830) and, thereafter, limited to a value such as a maximum value or upper limit (in a step or module 840). The maximum value or upper limit may take into consideration a communication path loss from the D2D user equipment to a base station or other device. If the HARQ feedback message provides a negative acknowledgment ("NACK"), the transmitter power level is decremented (in a step or module 850) and, thereafter, limited to a value such as a minimum value or lower limit (in a step or module 860) The method ends in a step or module 870.

The communication spectral efficiency is improved by efficiently reusing a communication resource by user equipment participating in D2D communications. The transmitter power level can be adjusted to an improved or even optimal operational point that can reduce or avoid interference with user equipment participating in cellular communications with a suitable selection of the transmitter power level while enhancing D2D communication performance. The process saves PDCCH communication resources that would otherwise be required by a base station to send power control commands to the user equipment participating in the D2D communications. The process described hereinabove of monitoring signal quality feedback to wireless communication devices such as use equipment communicating with an access point such as a base station can be readily extended to other spectrum reuse cases, thereby providing a generic solution for secondary communication spectrum usage.

Thus, an apparatus, method and system are introduced herein for to controlling a transmitter power level for direct device-to-device communications in a communication system. In one embodiment, an apparatus (*e.g.*, embodied in a user equipment) includes a processor and memory including computer program code. The memory and the computer program code are configured to, with the processor, cause the apparatus to monitor a feedback message (e.g., a HARQ feedback message) on a downlink channel *(e.g.,* a PDCCH) from a base station to a user equipment participating in cellular communications employing a communication resource, and control a transmitter power level for D2D communications employing the communication resource as a function of the feedback message, thereby reducing interference with the cellular communications.

Additionally, the memory and the computer program code are further configured to, with the processor, cause the apparatus to increase the transmitter power level to an upper limit when the feedback message provides a positive acknowledgement to the cellular communications and decrease the transmitter power level to a lower limit when the feedback message provides a negative acknowledgement to the cellular communications. The memory and the computer program code are further configured to, with the processor, cause the apparatus to control the transmitter power level as a function of a BLER target value for the user equipment participating in the cellular communications. The memory and the computer program code are further configured to, with the processor, cause the apparatus to monitor an uplink grant to the user equipment to ascertain the communication resource and generate a request-to-send/clear-to-send ("RTS/CTS") message sequence to obtain the communication resource. Although the apparatus, method and system described herein have been described with respect to cellular-based communication systems, the apparatus and method are equally applicable to other types of communication systems such as a WiMax° communication system.

Program or code segments making up the various embodiments of the present invention may be stored in a computer readable medium or transmitted by a computer data signal embodied in a carrier wave, or a signal modulated by a carrier, over a transmission medium. For instance, a computer program product including a program code stored in a computer readable medium may form various embodiments of the present invention. The "computer readable medium" may include any medium that can store or transfer information. Examples of the computer readable medium include an electronic circuit, a semiconductor memory device, a read only memory ("ROM"), a flash memory, an erasable ROM ("EROM"), a floppy diskette, a compact disk ("CD")-ROM, an optical disk, a hard disk, a fiber optic medium, a radio frequency ("RF") link, and the like. The computer data signal may include any signal that can propagate over a transmission medium such as electronic communication network communication channels, optical fibers, air, electromagnetic links, RF links, and the like. The code segments may be downloaded via computer networks such as the Internet, Intranet, and the like.

As described above, the exemplary embodiment provides both a method and corresponding apparatus consisting of various modules providing functionality for performing the steps of the method. The modules may be implemented as hardware (embodied in one or more chips including an integrated circuit such as an application specific integrated circuit), or may be implemented as software or firmware for execution by a computer processor. In particular, in the case of firmware or software, the exemplary embodiment can be provided as a computer program product including a computer readable storage structure embodying computer program code (i.e., software or firmware) thereon for execution by the computer processor.

Although the present invention and its advantages have been described in detail, it should be understood that various changes, substitutions and alterations can be made herein without departing from the spirit and scope of the invention as defined by the appended claims. For example, many of the features and functions discussed above can be implemented in software, hardware, or firmware, or a combination thereof. Also, many of the features, functions and steps of operating the same may be reordered, omitted, added, *etc.,* and still fall within the broad scope of the present invention.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

**Claims**

**1.** An apparatus, comprising:

       a processor; and
       memory including computer program code,
       said memory and said computer program code configured to, with said processor, cause said apparatus to perform at least the following:

    monitor a feedback message from a base station to a user equipment participating in cellular communications employing a communication resource; and
    control a transmitter power level for device-to-device (D2D) communications employing said communication resource as a function of said feedback message.

**2.** The apparatus as recited in claim 1 wherein said memory and said computer program code are further configured to, with said processor, cause said apparatus to increase said transmitter power level when said feedback message provides a positive acknowledgement to said cellular communications.

**3.** The apparatus as recited in claim 2 wherein said memory and said computer program code are further configured to, with said processor, cause said apparatus to increase said transmitter power level to an upper limit when said feedback message provides said positive acknowledgement to said cellular communications.

**4.** The apparatus as recited in claim 1 wherein said memory and said computer program code are further configured to, with said processor, cause said apparatus to decrease said transmitter power level when said feedback message provides a negative acknowledgement to said cellular communications.

**5.** The apparatus as recited in claim 4 wherein said memory and said computer program code are further configured to, with said processor, cause said apparatus to decrease said transmitter power level to a lower limit when said feedback message provides said negative acknowledgement to said cellular communications.

**6.** The apparatus as recited in claim 1 wherein said memory and said computer program code are further configured to, with said processor, cause said apparatus to monitor an uplink grant to said user equipment to ascertain said communication resource.

**7.** The apparatus as recited in claim 1 wherein said memory and said computer program code are further configured to, with said processor, cause said apparatus to generate a request-to-send/clear-to-send (RTS/CTS) message sequence to obtain said communication resource.

**8.** The apparatus as recited in any of claims 1-5 wherein said feedback message is a hybrid automatic retransmit request (HARQ) feedback message.

**9.** The apparatus as recited in claim 1 wherein said memory and said computer program code are further configured to, with said processor, cause said apparatus to control said transmitter power level as a function of a block error rate (BLER) target value for said user equipment participating in said cellular communications.

**10.** A computer program product comprising a program code stored in a computer readable medium configured to:

    monitor a feedback message from a base station to a user equipment participating in cellular communications employing a communication resource; and
    control a transmitter power level for device-to-device (D2D) communications employing said communication resource as a function of said feedback message.

**11.** The computer program product as recited in claim 10 wherein said program code stored in said computer readable medium is configured to increase said transmitter power level to an upper limit when said feedback message provides a positive acknowledgement to said cellular communications or to decrease said transmitter power level to a lower limit when said feedback message provides a negative acknowledgement to said cellular communications.

**12.** A method, comprising:

    monitoring a feedback message from a base station to a user equipment participating in cellular communications employing a communication resource; and
    controlling a transmitter power level for device-to-device (D2D) communications employing said communication resource as a function of said feedback message.

**13.** The method as recited in claim 12 further comprising increasing said transmitter power level to an upper limit when said feedback message provides a positive acknowledgement to said cellular communications.

14. The method as recited in claim 12 further comprising decreasing said transmitter power level to a lower limit when said feedback message provides a negative acknowledgement to said cellular communications.

15. The method as recited in claim 12, further comprising:

monitoring an uplink grant to said user equipment to ascertain said communication resource; and
generating a request-to-send/clear-to-send (RTS/CTS) message sequence to obtain said communication re-source.

FIGURE 1

FIGURE 2

FIGURE 3

FIGURE 4

560

Transceiver 570

Memory 550

Communication Element 510

Processor 520

Precoder 521

Encoder/Decoder 523

Controller 525

Resource Manager 528

Network Control Element 580

Telecommunication Network

FIGURE 5

FIGURE 6

eNB

CeUEs

Rx DUEs

Tx DUEs

time

UL grant- 710

UL transmissions 760

HARQ Feedbacks 770

Monitor cellular UL grants 730

RTS/CTS to claim the unique resources among D2D UEs 740

D2D transmission 750

Monitor cellular UL grants 720

Monitor the victim cellular UEs HARQ feedbacks 780

Perform PC based on HARQ feedbacks 790

FIGURE 7

```
                    ┌──────────────────────────────────┐
                    │  start              810          │
                    └──────────────────────────────────┘
                                    │
                                    ▼
              NACK          ◇ monitor          ACK
          ┌────────────────◇   HARQ    820 ◇────────────────┐
          │                ◇  feedback      ◇               │
          │                    ◇         ◇                   │
          ▼                                                  ▼
┌──────────────────────────────┐          ┌──────────────────────────────┐
│ decrement D2D transmitter    │          │ increment D2D transmitter    │
│ power              850       │          │ power              830       │
└──────────────────────────────┘          └──────────────────────────────┘
          │                                                  │
          ▼                                                  ▼
┌──────────────────────────────┐          ┌──────────────────────────────┐
│ limit D2d transmitter power  │          │ limit D2D transmitter power  │
│ to a minimum value    860    │          │ to a maximum value    840    │
└──────────────────────────────┘          └──────────────────────────────┘
          │                                                  │
          └───────────────────────┬──────────────────────────┘
                                   ▼
                    ┌──────────────────────────────────┐
                    │  end                870          │
                    └──────────────────────────────────┘
```

FIGURE 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005060182 A, McLaughlin

**Non-patent literature cited in the description**

- *3GPP TS 25.331 v.9.1.0,* December 2009
- *3GPP TS 36.331 v.9.1.0,* December 2009
- *3GPP TS 36.213 v.8.8.0,* September 2009, vol. 8.8.0